# EUROPEAN PATENT SPECIFICATION

(11) **EP 3 451 303 B1**
(45) Date of publication and mention of the grant of the patent: **19.08.2020**
(21) Application number: 17788484.8
(22) Date of filing: 27.04.2017
(51) Int. Cl.: G07F 17/00, B62H 3/00, B62H 5/00

(54) **RENTAL SYSTEM AND CONTROL METHOD FOR POWER-ASSISTED BICYCLE, LOCKING DEVICE USED IN SYSTEM, POWER-ASSISTED BICYCLE AND COUPLER THEREOF**
VERMIETUNGSSYSTEM UND STEUERUNGSVERFAHREN FÜR ANTRIEBSUNTERSTÜTZTES FAHRRAD, IN DEM SYSTEM VERWENDETE VERRIEGELUNGSVORRICHTUNG UND KOPPLER DAFÜR
SYSTÈME DE LOCATION ET PROCÉDÉ DE COMMANDE POUR BICYCLETTE À ASSISTANCE ÉLECTRIQUE, DISPOSITIF DE VERROUILLAGE UTILISÉ DANS LE SYSTÈME, BICYCLETTE À ASSISTANCE ÉLECTRIQUE ET COUPLEUR ASSOCIÉ

(30) Priority: 27.04.2016 CN 201610269291; 27.04.2016 CN 201610270931; 06.05.2016 CN 201610299371
(43) Date of publication of application: 06.03.2019
(73) Proprietor: Youon Technology Co., Ltd., Changzhou, Jiangsu 213000 (CN)
(72) Inventor: HUANG, Deyun, Changzhou Jiangsu 213000 (CN); LU, Minmin, Changzhou Jiangsu 213000 (CN); MAO, Fei, Changzhou Jiangsu 213000 (CN); YIN, Zhenya, Changzhou Jiangsu 213000 (CN); ZHAO, HaIhua, Changzhou Jiangsu 213000 (CN)
(74) Representative: Ridderbusch, Oliver
(86) International application number: PCT/CN2017/000330
(87) International publication number: WO 2017/185821

(56) References cited:
- WO-A1-2009/080566
- AT-A2- 508 326
- CN-A- 101 645 186
- CN-A- 102 104 593
- CN-A- 105 825 591
- CN-A- 105 835 998
- CN-A- 105 882 793
- CN-U- 202 926 052
- CN-U- 202 926 052
- CN-U- 202 926 052
- CN-U- 204 978 273
- CN-U- 205 092 359
- CN-U- 205 608 896
- CN-U- 205 737 802
- CN-U- 205 737 806
- DE-A1-102012 109 379
- JP-A- 2001 211 554
- KR-U- 20110 001 362

## Description

### Technical field

The present invention relates to rental system and control method for power-assisted bicycle, locking device applied in system, power-assisted bicycle and coupler thereof.

### Background of the invention

In order to create an urban low-carbon name card, more and more cities have launched a public bicycle rental system. The existing public bicycle rental system uses common bicycles, although the electric boosting bicycle is characterized with easier riding, owing to frequent charging and long-term foreign rental, it is hard for technicians to grasp the real-time data of the battery pack, which causes inconvenience for the management and maintenance of power-assisted bicycles, secondly, power-assisted bicycles are parked outside for a long term, which is prone to oxidation of charging joints and poor contact and other problems, thirdly, the input voltage of existing chargers is 220V, which is unsuitable for a public bicycle system. In order to comprise power-assisted bicycles into the public bicycle system, it is required to fully consider the charging function, waterproof function, identity identification and management of locking devices and power-assisted bicycles.

KR 2020110001362 U, which discloses all the features of the preamble of independent claim 1, describes a bicycle supporter to which an electric bicycle 100 can be connected and locked. A battery of the bicycle can be charged through a combining member of the bicycle when the combining member connects to the bicycle supporter.

CN 202926052 U describes a locking device for an electric bicycle which also provides electric charging.

### Summary of the Invention

The first purpose of the present invention is to provide a coupler of a power-assisted bicycle for the power-assisted bicycle rental system.

The technical plan for achieving the first purpose of the present invention is a coupler of a power-assisted bicycle comprising a main body with a cavity and an electronic tag for vehicle identity identification in the cavity and further comprising a charging module and an infrared coupler communication module;
the left charging terminal of the charging module is exposed on the left side face of the main body while the right charging terminal is exposed on the right side face of the main body;
the lens of the infrared coupler communication module is exposed on the surface of the main body;
a lock hole is provided on the front end of the main body.

Further, a left insulation layer is closely wrapped around the left charging terminal and a right insulation layer is closely wrapped around the right charging terminal.

Further, the charging module further comprises a cylindrical shell, charging cable and charging column;
the left panel of the cylindrical shell forms the left insulation layer and the right panel of the cylindrical shell forms the right insulation layer;
the cavity of the main body comprises a routing channel in which the charging cable is provided;
one side of the charging column is connected with the charging terminal and the other side is connected with the charging cable.

Furthermore, the charging column comprises a left charging column and right charging column; a routing hole leading to the back is provided on the rear side wall of the cylindrical shell;
one side of the left charging column is connected with the left charging terminal, and the other side stretches out from the routing hole and is connected with the charging cable;
one side of the right charging column is connected with the right charging terminal, and the other side stretches out from the routing hole and is connected with the charging cable.

Further, the left side of the charging terminal is aligned with the left side of the left panel and the left side of the main body; the right side of the right charging terminal is aligned with the right side of the right panel and the right side of the main body.

Further, the left panel stretches around to form a lip edge raised against the side wall, a left opening consistent with the outer contour of the left panel with lip edge is provided on the left side of the main body while a right opening consistent with the outer contour of the right panel is provided on the right side of the main body; a positioning step is provided on the right of the left opening. When the cylindrical shell passes through from the left opening to the right opening, the positioning step realizes positioning through withstanding the lip edge.

Further, a first screwed hole is provided under the side wall of the cylinder shell; a locking block is fixed in the cavity and is provided under a first screwed hole, and a counterbore is provided on a first screwed hole corresponding to the locking block, and the cylindrical shell is firmly connected with the locking block through sunk screws.

Further, the cylindrical shell is an integral cuboid plastic part, and the outer contour of the lip edge is rectangular, and both the left charging terminal and right charging terminal are rectangular copper sheets.

Further, the coupler connection terminal of the infrared coupler communication module is connected with a communication cable, and the communication cable is arranged in a routing channel; the infrared coupler communication module is integrated with a magnetic control switch.

Further, a lip is provided on the infrared coupler communication module, and the two surfaces of the lip forming on the infrared coupler communication module are vertically and closely jointed with the undersurface and rear surface of the locking block respectively.

Further, the coupler further comprises a cover;
an opening is provided at the bottom of the main body, and the cover is firmly connected with the main body and is applied to close the opening;
a telltale hole is provided on the cover, and the lens is put in the telltale hole and its undersurface is aligned with the undersurface of the cover, and the contour of the telltale hole is consistent with that of the lens.

Further, the outer contour of the lens is rectangular.

Further, the main body comprises a first part, a second part and a third part of integral structure; the left-right width of the first part is less than that of the third part, and the cylindrical shell is provided in the first part, and the second part is quadrangular frustum pyramid and is connected between the first part and the third part; the opening sealed by the cover runs through the first part, the second part and the third part.

Further, the lock hole is provided on the front end of the first part and forms the square hole running through the first part from left to right; a communication slot is provided on the right side of the first part, and is located between the lock hole and the right charging terminal, and the electronic tag is provided to get close to the communication slot.

The second purpose of the present invention is to provide a power-assisted bicycle for the power-assisted bicycle rental system.

The technical plan for achieving the second purpose of the present invention is a power-assisted bicycle comprising a body and battery management system, the battery management system comprises an infrared communication module and battery cell; the battery cell is provided on the body; the front fork of the body is fixed with the coupler mentioned above, and the battery management system is electrically connected with the infrared coupler communication module and charging module respectively.

Further, a mounting box is provided on the down tube of the body, and the battery is sealed and provided in the mounting box, and a headlamp is further provided on the front fork of the body and fixed above the coupler.

The third purpose of the present invention is to provide a locking device for the power-assisted bicycle rental system, and the locking device is applied to cooperate with the bicycle coupler mentioned above.

The technical plan for achieving the third purpose of the present invention is a locking device comprising a shell, controller and electric control lock; a locking notch is provided on the side of the shell and is connected with the locking channel in the shell; and the electric control lock is connected with the controller that controls the opening and closing of the electric control lock; the locking device further comprises two charging contact assemblies, an infrared locking device communication module and a charger;
the two charging contact assemblies are fixed in the shell; the two charging contact assemblies are applied for respective electric connection with the two charging terminals on the coupler of a power-assisted bicycle when they stretch into the locking channel;
the infrared locking device communication module is fixed in the shell; the infrared locking device communication module is applied for the infrared communication with the infrared coupler communication module on the power-assisted bicycle when it stretches into the locking channel;
the charger is electrically connected with the two charging contact assemblies;
the controller is electrically connected with the charger and infrared locking device communication module respectively.

Further, each charging contact assembly mentioned herein comprises a metal shell and the rolling ball and compressed spring provided in the metal shell;
one side of the metal shell is closed and a circular opening is provided in the center of the other side;

The diameter of the rolling ball is larger than that of the circular opening;
one side of the compressed spring is pressed on the closed end of the metal shell, and the other side presses the rolling ball and enables a part of the rolling ball to protrude out of the metal shell from the circular opening.

Further, the two metal shells are provided on the right and left sides of the locking channel, and the planes where the two circular openings are located are parallel to each other and are symmetric to the central plane of the locking channel;
the central plane is a vertical plane equally dividing the locking channel.

Further, the two charging contact assemblies further comprise two locking device connection terminals that are connected with the metal shell and the charger.

Further, the metal shell is cylindrical, and the locking device connection terminal comprises an integral L-shape bending part and a circular-arc convoluted part, the inner wall of the convoluted part is closely jointed with the outer wall of the metal shell, and the bending part connects the charger through a charging cable.

Further, the two charging contact assemblies further comprise two fixed components that are composed of a base and pressing block, the base is fixed on the bottom plate of the shell, and the locking device connection terminal is inlaid in the groove of the base, and the pressing block is firmly connected with the base through screws, and the metal shell is pressed between the pressing block and base.

Further, there is a U-shape shell protruding forward on the front shell plate of the shell, and the locking notch is provided on the U-shape shell, a positioning stud and mounting plate are provided in the U-shape shell, the lower end of the positioning stud is fixed on the bottom plate of the shell, and its upper end is firmly connected with the mounting plate, and the inner wall of the U-shape shell is closely jointed with the edge of the mounting plate, and the mounting plate is pressed on the two pressing blocks.

Further, the infrared locking device communication module comprises a communication module with a lens and magnet.

Further, the infrared locking device communication module further comprises a housing and T-shape slab; a telltale hole connecting the locking channel from its bottom is provided on the housing, the T-shape slab is fixed with the housing by threads, the communication module with a lens is fixed between the T-shape slab and housing, and the lens is placed in the communication hole.

Further, the locking device further comprises a display screen displaying the quantity of electricity of bicycle, system voltage, QR code, date and locking device code, and it is connected with the controller.

Further, the charger is the intelligent charger equipped with MCU; when it is detected that the quantity of electricity of a non-power-assisted bicycle or power-assisted bicycle does not reach the required charging value, charging is not required.

The fourth purpose of the present invention is to provide a power-assisted bicycle rental system.

The technical plan for achieving the fourth purpose of the present invention is power-assisted bicycle rental system comprising a power-assisted bicycle and locking device station controller; the power-assisted bicycle adopts the structure mentioned above, comprising a coupler and battery management system; the coupler comprises a charging module with a charging terminal; the battery management system comprises an infrared battery pack communication module and battery cell; the locking device adopts the structure mentioned above, comprising the controller, electric control lock, charging contact assembly, infrared locking device communication module and charger provided on the shell, and the charging contact assembly is electrically connected with the charger; the charger, infrared locking device communication module and electric control lock are electrically connected with the controller; the station controller comprises a cabinet and station MCU and charging power conversion monitoring system provided inside the cabinet; the charging power conversion monitoring system comprises a power converter, and its output end is connected with the input end of the charger of the locking device.

Further, the infrared battery pack communication module comprises a PCB board, and the Hall induction unit, infrared receiving unit and infrared emission unit provided on the PCB board; the battery management system further comprises a BMS controller, and the Hall induction unit, infrared receiving unit and infrared emission unit are electrically connected with the BMS controller.

Further, the BMS controller comprises a main control module, charging module and discharging module.

Further, the charging module of the coupler comprises a left charging terminal and right charging terminal that are respectively provided on the left and right sides of the main body of the coupler; the infrared battery pack communication module is provided on the undersurface of the main body of the coupler; the charging contact assembly of the locking device is corresponding to the charging terminal of the coupler.

Further, a fan is provided on the side of the cabinet of the station controller, and a diversion trench is provided under the fan, and a heat dissipation device is provided under the diversion trench.

Further, a power management mechanism is provided in the cabinet; the input end of the power management mechanism is connected with 220 V commercial power and the electric power output by solar cell panel and battery, and its output end supplies power to the station controller and locking device and charges the power-assisted bicycle.

The fifth purpose of the present invention is to provide a control method for the power-assisted bicycle rental system.

The technical plan for achieving the fifth purpose of the present invention is the control method for the power-assisted bicycle rental system, and it comprises the following steps:
Step 1: the charging power conversion monitoring system of the station controller converts 220v AC to low-voltage DC which can be applied for charging several locking devices;
Step 2: the coupler of a power-assisted bicycle is inserted into the locking device to allow the charging contact assemblies of the coupler and locking device to contact with the charging terminal, and the infrared battery pack communication module to communicate with the infrared locking device communication module;
Step 3: the controller of locking device reads the electronic tag in the coupler to judge whether it is a power-assisted bicycle, if not, the process ends; otherwise, please move to step 4;
Step 4: the battery cell is charged.

In the step 4, the infrared locking device communication module of the locking device communicates with the infrared battery pack communication module, if the data of the battery cell fail to be obtained, it is identified as a non-power-assisted bicycle, so it is not required to charge the locking device; if the data of the battery cell is obtained, when the quantity of electricity of the battery cell exceeds the required charging quantity of electricity, it is not required to charge the locking device; when the charging quantity of electricity reaches the required quantity of electricity, it is required to stop charging to the locking device.

After the coupler is inserted into the locking channel, when the magnetic control switch of the infrared coupler communication module detects the magnetic field emitted by the magnet of the locking device, it gives a signal to the locking device to indicate that the power-assisted bicycle has been parked in right place; after the infrared communication module of the locking device communicates with the infrared battery pack communication module, and the Hall induction unit in the infrared battery pack communication module senses the magnet of the locking device, the discharging module of the power-assisted bicycle is closed.

By adopting the above technical plans, the present invention has the following positive effect:
(1) The charging module with a charging terminal provided in the coupler of the present invention controls charging through wireless communication realized by the infrared communication module and the locking device, allowing the coupler of the present invention to have additional charging and communication functions on the basis that original common public bicycles only have locking and identity identification functions, and thus providing a condition for power-assisted bicycles to become public bicycles.
(2) For the coupler of the present invention, two contacts of the charging module are respectively provided on the left and right sides of the main body, which not only reduces the possibility of short circuit of two contacts resulted from rainwater, but also lowers the reconstruction expenses and difficulty, the reason for which is that the coupler is basically same as the locking device applied by original common bicycles in shape, so the old locking device upon a slight modification can be applied to the rental system of electric boosting bicycle.
(3) The power-assisted bicycle and locking device in the rental system of the present invention can conduct wireless communication through an infrared communication module, which is more reliable than the contact-form communication method, and the infrared coupler communication module is provided at the bottom of the main body, which is beneficial to resist water and dust.
(4) The locking device of the present invention has simple and ingenious structures, is safe and reliable and has low failure rate, which ensures its long-term stable operation.
(5) The locking device adopted by the rental system of the present invention and power-assisted bicycle both have an infrared communication module, so that the power-assisted bicycle can be charged by means of the locking device communicating with a battery management system of the power-assisted bicycle, thus ensuring the normal usage of the power-assisted bicycle in a public rental system.
(6) The station controller of the present invention is provided with a charging system which can convert 220V voltage into low-voltage output so as to charge several locking devices.
(7) With simple structures, small volume and low cost, the infrared communication module of the battery system of the power-assisted bicycle in the present invention enables technicians to timely grasp the data of the battery cell to provide convenience for the management and maintenance of power-assisted bicycles; meanwhile, the Hall induction unit, infrared receiving unit and infrared emission unit cooperate by division of labor, and react flexibly, and do not interfere one another, which is convenient for maintenance and detection.
(8) The discharging module is closed after the power-assisted bicycle of the present invention is wheeled to a parking pile and placed properly, which enables the power-assisted bicycle to enter into a power saving mode when not traveling, thus reducing power consumption and further effectively saving the energy.
(9) A diversion trench is provided on the cabinet of the station controller in the present invention, which is convenient to drain little rainwater entering into the cabinet to outside, and a fender is provided on the entire side of the cabinet to cover all parts inside and avoid exposure.

### Brief Description of the Drawings

In order to make the contents of the present invention understood more easily and clearly, further detailed descriptions for the present invention are made as follows based on specific Embodiments and in combination with attached drawings, wherein
Figure 1 is the structural schematic diagram of a coupler of the present invention.
Figure 2 is the structural schematic diagram of a coupler charging module of the present invention.
Figure 3 is the structural schematic diagram of a locking device of the present invention.
Figure 4 is the enlarged drawing of position A in Figure 3.
Figure 5 is the structure diagram of a rental system of the present invention.

### Description of the invention

### (Embodiment 1)

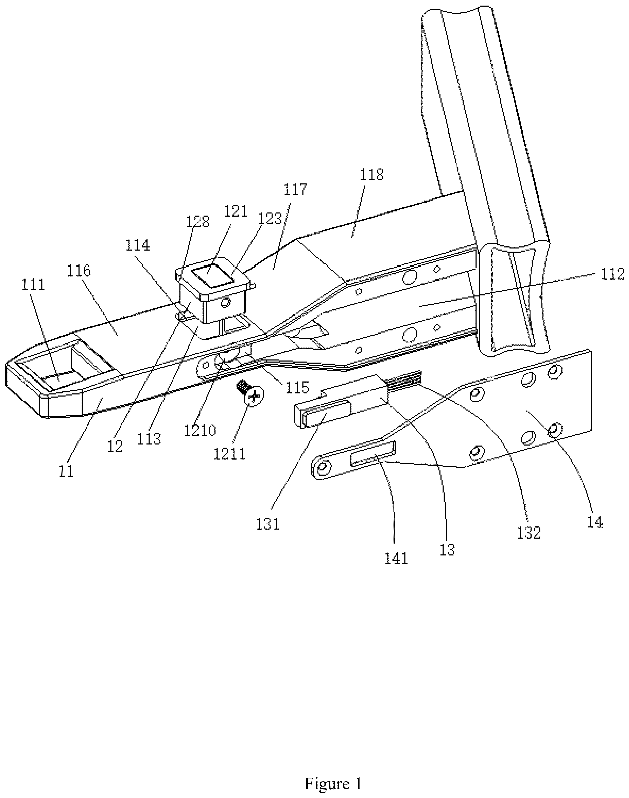

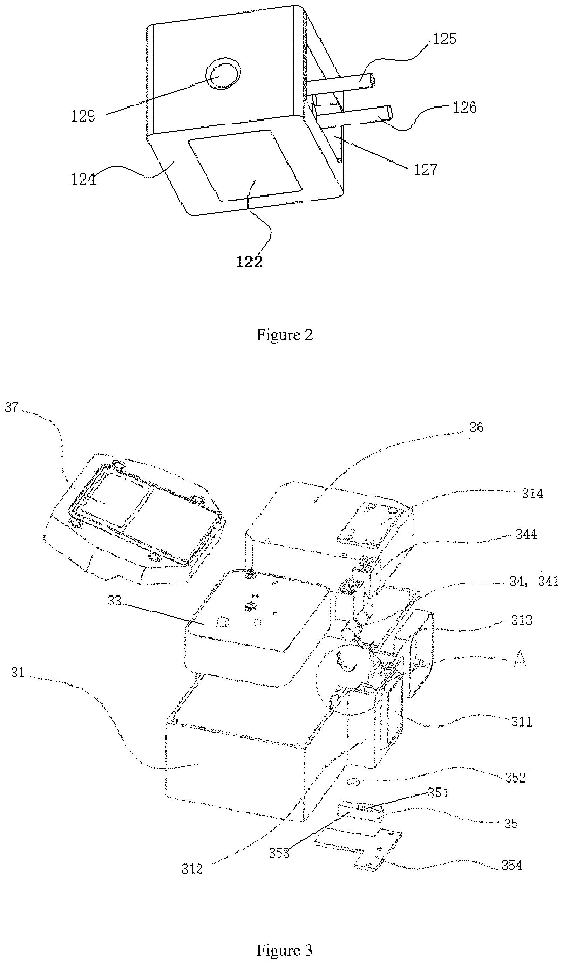

Figure 1 and Figure 2 show the structures of the coupler of a power-assisted bicycle , including a main body 11 with a cavity, an electronic tag for vehicle identity identification in the cavity, a charging module 12, an infrared coupler communication module 13 and a cover 14; there is an opening at the bottom of the main body 11, the cover 14 and main body 11 are firmly connected and applied to close the opening; a telltale hole 141 is provided on the cover 14, and the lens 131 is put into the telltale hole 141, and its undersurface is aligned with the undersurface of the cover 14, and the contour of the telltale hole 141 is consistent with the outer contour of the lens 131.

The main body 11 comprises a first part 116, a second part 117 and a third part 118 of integral structure; the left-right width of the first part 116 is less than that of the third part 118, and the cylindrical shell is provided in the first part 116, and the second part 117 is quadrangular frustum pyramid and is connected between the first part 116 and the third part 118; the opening sealed by the cover 14 runs through the first part 116, the second part 117 and the third part 118. The lock hole 111 is provided on the front end of the first part 116, and forms the square hole running through the first part 116 from left to right; a communication slot is provided on the right side of the first part 116, and is located between the lock hole 111 and the right charging terminal 122, and the electronic tag is provided to get close to the communication slot.

The left charging terminal 121 of the charging module 12 is exposed on the left side face of the main body 11 while the right charging terminal 122 is exposed on the right side face of the main body 11; the lens 131 of the infrared coupler communication module 13 is exposed on the surface of the main body 11; a lock hole 111 is provided on the front end of the main body 11. A left insulation layer is closely wrapped around the left charging terminal 121 while a right insulation layer is closely wrapped around the right charging terminal 122. As shown in Figure 2, the charging module 12 comprises a cylindrical shell, charging cable and charging column; the left panel 123 of the cylindrical shell forms the left insulation layer and the right panel 124 of the cylindrical shell forms the right insulation layer; the cavity of the main body 11 comprises a routing channel 112, and a charging cable is provided in the routing channel 112; one side of the charging column is connected with the charging terminal and the other side is connected with the charging cable. The charging column comprises a left charging column 125 and right charging column 126; a routing hole 127 leading to the back is provided on the rear side wall of the cylindrical shell; one side of the left charging column 125 is connected with the left charging terminal and the other side stretches out from the routing hole 127 and is connected with the charging cable; one side of the right charging column 126 is connected with the right charging terminal and the other side stretches out from the routing hole 127 and is connected with the charging cable. The left side of the left charging terminal 121 is aligned with the left side of the left panel 123 and the left side of the main body 11; the right side of the right charging terminal 122 is aligned with the right side of the right panel 124 and the right side of the main body 11. As shown in Figure 1, the left panel 123 of the charging module 12 stretches around to form a lip edge 128 raised against the side wall, a left opening 113 consistent with the outer contour of left panel 123 with a lip edge is provided on the left side of the main body 11 while a right opening consistent with the outer contour of right panel 124 is provided on the right side of the main body 11; a positioning step 114 is provided on the right of the left opening 113, when the cylindrical shell passes through from the left opening 113 to the right opening, the positioning step 114 realizes positioning through withstanding the lip edge 128. a first screwed hole 129 is provided under the side wall of the cylinder shell; a locking block 115 is fixed in the cavity and is provided under a first screwed hole 129, and a counterbore 1210 is provided on a first screwed hole 129 corresponding to the locking block 115, and the cylindrical shell is firmly connected with the locking block 115 through sunk screws 1211. The cylindrical shell is an integral cuboid plastic part, and the outer contour of the lip edge 128 is rectangular, and both the left charging terminal 121 and right charging terminal 122 are rectangular copper sheets.

The coupler connection terminal 132 of the infrared coupler communication module 13 is connected with a communication cable, and the communication cable is arranged in a routing channel; the infrared coupler communication module 13 is integrated with a magnetic control switch. A lip 133 is provided on the infrared coupler communication module 13, and the two surfaces of the lip 133 forming on the infrared coupler communication module 13 are vertically and closely jointed with the undersurface and rear surface of the locking block 115 respectively. The outer contour of the lens is rectangular.

### (Embodiment 2)

A power-assisted bicycle in this Embodiment comprises a body and battery management system 2, the battery management system 2 comprises an infrared communication module and battery cell; the battery cell is provided on the body; the front fork of the body is fixed with the coupler 1 in the Embodiment 1, and the battery management system 2 is electrically connected with the infrared coupler communication module 13 and charging module 12 respectively. A mounting box is provided on the down tube of the body, and a battery is sealed and provided in the mounting box, and a headlamp is further provided on the front fork of the body and is fixed above the coupler 1.

### (Embodiment 3)

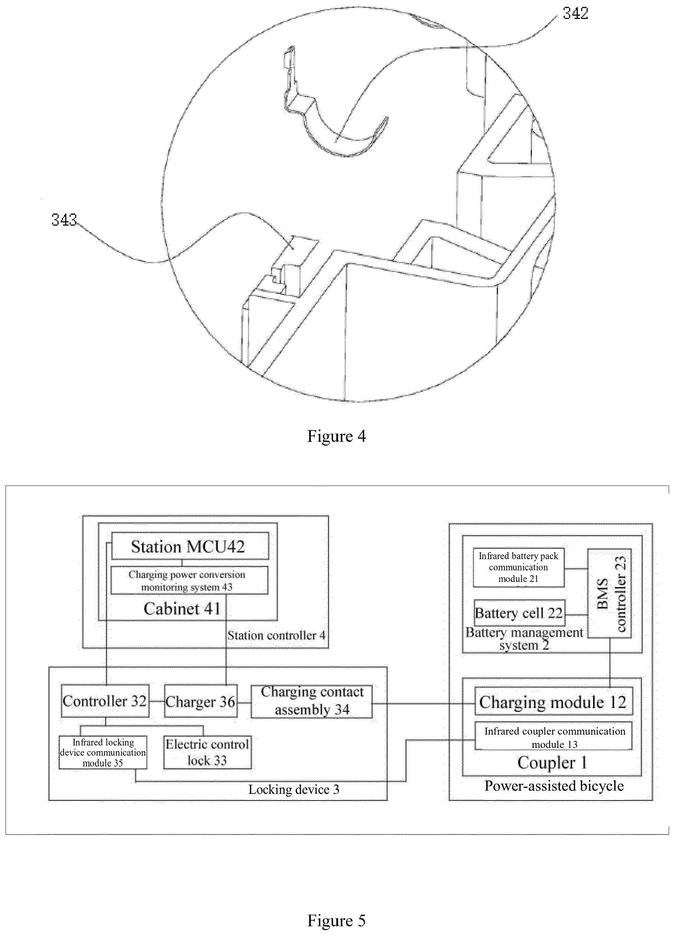

Figure 3 and Figure 4 show the structures of the locking device. The locking device comprises a shell 31, a controller 32, an electric control lock 33, two charging contact assemblies 34, an infrared locking device communication module 35 and a charger 36.

A locking notch 311 is provided on the side of the shell 31 and connected with the locking channel in the shell 31; and the electric control lock 33 connects the controller 32 that controls the opening and closing of the electric control lock 33; there is a U-shape shell 312 protruding forward on the front shell plate of the shell 31, and the locking notch 311 is provided on the U-shape shell 312, a positioning stud 313 and mounting plate 314 are provided in the U-shape shell 312, the lower end of the positioning stud 313 is fixed on the bottom plate of the shell 31, and its upper end is firmly connected with the mounting plate 314, and the inner wall of the U-shape shell 312 is closely jointed with the edge of the mounting plate 314, and the mounting plate 314 is pressed on the two pressing blocks 344.

The controller 32 is electrically connected with the charger 36 and the infrared communication module 35 of the locking device.

The two charging contact assemblies 34 are fixed in the shell 31; the two charging contact assemblies 34 are applied for respective electric connection with the two charging terminals on the coupler of a power-assisted bicycle 1 when they stretch into the locking channel; each charging contact assembly 34 mentioned herein comprises a metal shell 341 and the rolling ball and compressed spring provided in the metal shell 341; one side of the metal shell 341 is closed and a circular opening is provided in the center of the other side; the diameter of the rolling ball is larger than that of the circular opening; one side of the compressed spring is pressed on the closed end of the metal shell, and the other side presses the rolling ball and enables a part of the rolling ball to protrude out of the metal shell from the circular opening. The two metal shells 341 are provided on the right and left of the locking channel, and the planes where the two circular openings are located are parallel to each other and are symmetric to the central plane of the locking channel; the central plane is a vertical plane equally dividing the locking channel. The two charging contact assemblies 34 further comprise two locking device connection terminals 342 that are connected with the metal shell 341 and the charger 36. The metal shell 341 is cylindrical, and the locking device connection terminal 342 comprises an integral L-shape bending part and a circular-arc convoluted part, the inner wall of the convoluted part is closely jointed with the outer wall of the metal shell 341, and the bending part connects the charger 36 through a charging cable. The two charging contact assemblies 34 further comprise two fixed components that are composed of a base 343 and pressing block 344, the base 343 is fixed on the bottom pate of the shell 31, and the locking device connection terminal 342 is inlaid in the groove of the base 343, and the pressing block 344 is firmly connected with the base 343 through screws, and the metal shell 341 is pressed between the pressing block 344 and base 343.

The infrared locking device communication module 35 is fixed in the shell 31; the infrared locking device communication module 35 of the locking device is applied for infrared communication with the infrared coupler communication module 13 on the power-assisted bicycle when it stretches into the locking channel; the infrared locking device communication module 35 of locking device comprises a communication module with a lens 351 and magnet 352. The infrared locking device communication module 35 further comprises a housing 353 and T-shape slab 354; a telltale hole connecting with the locking channel from its bottom is provided on the housing 353, the T-shape slab 354 is fixed with the housing 353 by threads, the communication module with a lens 351 is fixed between the T-shape slab 354 and housing 353, and the lens 351 is placed in the communication hole.

The charger 36 is electrically connected with the two charging contact assemblies 34; the charger 36 is the intelligent charger equipped with MCU; when it is detected that the quantity of electricity of a non-power-assisted bicycle or power-assisted bicycle does not reach the required charging value, charging is not required.

As shown in Figure 3, the locking device further comprises a display screen 37 displaying the quantity of electricity of bicycle, system voltage, QR code, date and locking device code, and it is connected with the controller 32.

### (Embodiment 4)

As shown in Figure 5, the power-assisted bicycle rental system in this Embodiment comprises a power-assisted bicycle, locking device 3 and station controller 4; the power-assisted bicycle adopts the structures shown in Embodiment 2, including a coupler 1 and battery management system 2; the coupler 1 comprises a charging module 12 with a charging terminal; the battery management system 2 comprises an infrared battery pack communication module 21 and a battery cell 22; the locking device 3 adopts the structures in Embodiment 3, including a controller 32, an electric control lock 33, a charging contact assembly 34, an infrared locking device communication module 35 and a charger 36 provided on the shell 31, the charging contact assembly 34 is electrically connected with the charger 36; the charger 36 and infrared locking device communication module 35 and the electric control lock 33 are electrically connected with the controller 32; the station controller 4 comprises a cabinet 41 and the station MCU 42 and charging power conversion monitoring system 43 provided inside the cabinet 41; the charging power conversion monitoring system 43 comprises a power converter, and its output end is connected with the input end of the charger 36 of the locking device 3. The infrared battery pack communication module 21 comprises a PCB board and the Hall induction unit, infrared receiving unit and infrared emission unit provided on the PCB board; the battery management system 2 further comprises a BMS controller 23, and the battery cell 22, Hall induction unit, infrared receiving unit and infrared emission unit are electrically connected with the BMS controller 23. The BMS controller 23 comprises a main control module, charging module and discharging module. The charging module 12 of coupler 1 comprises a left charging terminal 121 and right charging terminal 122 that are respectively provided on the left and right sides of the main body 11 of the coupler 1; the infrared battery pack communication module 21 is provided on the undersurface of main body 11 of coupler 1; the charging contact assembly 34 of locking device 3 is corresponding to the charging terminal of coupler 1. A fan is provided on the side of the cabinet 41 of the station controller 4, and a diversion trench is provided under the fan, and a heat dissipation device is provided under the diversion trench. A power management mechanism is provided in the cabinet 41; the input end of the power management mechanism is connected with 220 V commercial power and the electric power output by solar cell panel and battery, and its output end supplies power to the station controller and locking device and charges the power-assisted bicycle.

### (Embodiment 5)

This Embodiment is a control method for the power-assisted bicycle rental system in Embodiment 4, and it comprises the following steps:
Step 1: the charging power conversion monitoring system 43 of the station controller 4 converts 220v AC to low-voltage DC which can be applied for charging several locking devices 3;
Step 2: the coupler 1 of power-assisted bicycle is inserted into the locking device 3 to allow the charging contact assembly of the coupler 1 and locking device 3 to contact with the charging terminal, and the infrared battery pack communication module 21 to communicate with the infrared communication module 35 of the locking device; after the coupler 1 is inserted into the locking channel, when the magnetic control switch of the infrared coupler communication module 13 detects the magnetic field emitted by the magnet 353 of the locking device 3, it gives a signal to the locking device 3 to indicate that the power-assisted bicycle has been parked in right place; after the infrared communication module 35 of the locking device 3 communicates with the infrared battery pack communication module 21, and the Hall induction unit in the infrared battery pack communication module 21 senses the magnet 353 of the locking device 3, the discharging module of the power-assisted bicycle is closed.
Step 3: the controller 32 of the locking device 3 reads the electronic tag in the coupler 1 to judge whether it is a power-assisted bicycle , if not, the process ends; otherwise, please move to step 4;
Step 4: the battery cell 22 is charged; the infrared communication module 35 of the locking device 3 communicates with the infrared battery pack communication module 21, if the data of the battery cell 22 fail to be obtained, it is identified as a non-boosting bicycle, so it is not required to charge the locking device 3; if the data of the battery cell 22 is obtained, when the quantity of electricity of the battery cell 22 exceeds the required charging quantity of electricity, it is not required to charge the locking device 3; when the charging quantity of electricity reaches the required quantity of electricity, it is required to stop charging to the locking device 3.

## Claims

1. A coupler of a power-assisted bicycle, comprises a main body (11) with a cavity (111) and an electronic tag for vehicle identity identification in the cavity, **characterized in that** the coupler of a power-assisted bicycle further comprises a charging module (12) and infrared coupler communication module (13);
a left charging terminal (121) of the charging module (12) is exposed on the left side face of the main body (11) while a right charging terminal (122) is exposed on the right side face of the main body (11);
a lens (131) of the infrared coupler communication module (13) is exposed on the surface of the main body (11);
a lock hole (111) is provided on the front end of the main body (11).

2. The coupler of a power-assisted bicycle of Claim 1, **characterized in that** a left insulation layer is closely wrapped around the left charging terminal (121) while a right insulation layer is closely wrapped around the right charging terminal (122);
the charging module (12) further comprises a cylindrical shell, charging cable and charging column;
the left panel (123) of the cylindrical shell forms the left insulation layer and the right panel (124) of the cylindrical shell forms the right insulation layer;
the cavity of the main body (11) comprises a routing channel (112), and the charging cable is provided in the routing channel (112);
one side of the charging column is connected with the charging terminal and the other side is connected with the charging cable.

3. The coupler of a power-assisted bicycle of Claim 2, **characterized in that** the charging column comprises a left charging column (125) and right charging column (126); a routing hole (127) leading to the back is arranged on the rear side wall of the cylindrical shell;
one side of the left charging column (125) is connected with the left charging terminal and the other side stretches out from the routing hole (127) and is connected with the charging cable;
one side of the right charging column (126) is connected with the right charging terminal and the other side stretches out from the routing hole (127) and is connected with the charging cable;
the left side of the left charging terminal (121) is aligned with the left side of the left panel (123) and the left side of the main body (11); the right side of the right charging terminal (122) is aligned with the right side of the right panel (124) and the right side of the main body (11).

4. The coupler of a power-assisted bicycle of Claim 3, **characterized in that** the left panel (123) stretches around to form a lip edge (128) raised against the side wall, a left opening (113) consistent with the outer contour of the left panel (123) with a lip edge is provided on the left side of the main body (11) while a right opening consistent with the outer contour of the right panel (124) is provided on the right side of the main body (11); a positioning step (114) is provided on the right of the left opening (113), when the cylindrical shell passes through from the left opening (113) to the right opening, the positioning step (114) realizes positioning through withstanding the lip edge (128).

5. The coupler of a power-assisted bicycle of Claim 2, **characterized in that** the coupler connection terminal (132) of the infrared coupler communication module (13) is connected with a communication cable, and the communication cable is arranged in a routing channel; the infrared coupler communication module (13) is integrated with a magnetic control switch.

6. The coupler of a power-assisted bicycle of Claim 5, **characterized in that** a lip (133) is provided on the infrared coupler communication module (13), and the two surfaces of the lip (133) forming on the infrared coupler communication module (13) are vertically and closely jointed with the undersurface and rear surface of the locking block (115) respectively.

7. The coupler of a power-assisted bicycle of Claim 1, **characterized in that** it further comprises a cover (14);
an opening is provided at the bottom of the main body (11), and the cover (14) is firmly connected with the main body (11) and is applied to close the opening;
a telltale hole (141) is provided on the cover (14), and the lens (131) is put in the telltale hole (141) and its undersurface is aligned with the undersurface of the cover (14), and the contour of the telltale hole (141) is consistent with that of the lens (131);
the outer contour of the lens (131) is rectangular.

8. The coupler of a power-assisted bicycle of Claim 1, **characterized in that** the main body (11) comprises a first part (116), a second part (117) and a third part (118) of integral structure; the left-right width of the first part (116) is less than that of the third part (118), and the cylindrical shell is provided in the first part (116), and the second part (117) is quadrangular frustum pyramid and is arranged between the first part (116) and the third part (118); the opening sealed by the cover (14) runs through the first part (116), the second part (117) and the third part (118);
the lock hole (111) is provided on the front end of the first part (116), and forms the square hole running through the first part (116) from left to right; a communication slot is provided on the right side of the first part (116), and is located between the lock hole (111) and the right charging terminal (122), and the electronic tag is provided to get close to the communication slot.

9. A power-assisted bicycle, comprises a body and battery management system (2), and the battery management system (2) comprises an infrared communication module and battery cell; the battery cell is provided on the body, **characterized in that** the front fork of the body is fixed with the coupler (1) of any one of Claims 1-8, and the battery management system (2) is electrically connected with the infrared coupler communication module (13) and the charging module (12) respectively.

10. A locking device comprises a shell (31), controller (32) and electric control lock (33); a locking notch (311) is provided on the side of the shell (31) and connected with the locking channel in the shell (31); and the electric control lock (33) connects with the controller (32) and the controller (32) controls the opening and closing of the electric control lock (33), **characterized in that** it further comprises two charging contact assemblies (34), an infrared locking device communication module (35) and a charger (36);
the two charging contact assemblies (34) are fixed in the shell (31); the two charging contact assemblies (34) are applied for respective electric connection with the two charging terminals on the coupler of a power-assisted bicycle (1) when they stretch into the locking channel;
the infrared locking device communication module (35) is fixed in the shell (31); the infrared locking device communication module (35) is applied for the infrared communication with the infrared coupler communication module (13) on the power-assisted bicycle when it stretches into the locking channel;
the charger (36) is electrically connected with the two charging contact assemblies (34); the controller (32) is electrically connected with the charger (36) and infrared locking device communication module (35) respectively.

11. The locking device of Claim 10, **characterized in that** each charging contact assembly (34) comprises a metal shell (341) and the rolling ball and compressed spring provided in the metal shell (341);
one side of the metal shell (341) is closed and a circular opening is provided in the center of the other side;
the diameter of the rolling ball is larger than that of the circular opening;
one side of the compressed spring is pressed on the closed side of the metal shell, and the other side presses the rolling ball and enables a part of the rolling ball to protrude out of the metal shell from the circular opening;
the two metal shells (341) are provided on the right and left of the locking channel, and the planes where the two circular openings are located are parallel to each other and are symmetric to the central plane of the locking channel;
the central plane is a vertical plane equally dividing the locking channel.

12. The locking device of Claim 11, **characterized in that** the two charging contact assemblies (34) further comprise two locking device connection terminals (342) that are connected with the metal shell (341) and the charger (36);
the metal shell (341) is cylindrical, and the locking device connection terminal (342) comprises an integral L-shape bending part and a circular-arc convoluted part, the inner wall of the convoluted part is closely jointed with the outer wall of the metal shell (341), and the bending part connects the charger (36) through a charging cable.

13. The locking device of Claim 12, **characterized in that** the two charging contact assemblies (34) further comprise two fixed components that are composed of a base (343) and pressing block (344), the base (343) is fixed on the bottom plate of the shell (31), and the locking device connection terminal (342) is inlaid in the groove of the base (343), and the pressing block (344) is firmly connected with the base (343) through screws, and the metal shell (341) is pressed between the pressing block (344) and base (343);
there is a U-shape shell (312) protruding forward on the front shell plate of the shell (31), and the locking notch (311) is provided on the U-shape shell (312), a positioning stud (313) and mounting plate (314) are provided in the U-shape shell (312), the lower end of the positioning stud(313) is fixed on the bottom plate of the shell (31), and its upper end is firmly connected with the mounting plate (314), and the inner wall of the U-shape shell (312) is closely jointed with the edge of the mounting plate (314), and the mounting plate (314) is pressed on the two pressing blocks (344).

14. A power-assisted bicycle rental system comprises a power-assisted bicycle, a locking device (3) station controller (4), **characterized in that** the power-assisted bicycle adopts the structure of Claim 9, including a coupler (1) and battery management system (2); the coupler (1) comprises the charging module (12) with a charging terminal; the battery management system (2) comprises an infrared battery pack communication module (21) and battery cell (22); the locking device (3) adopts any structure of Claims 10-13, the charger (36) being provided on the shell (31); the station controller (4) comprises a cabinet (41) and a station MCU (42) and charging power conversion monitoring system (43) provided inside the cabinet (41); the charging power conversion monitoring system (43) comprises a power converter, and its output end connects the input end of the charger (36) of the locking device (3).

15. The power-assisted bicycle rental system of Claim 14, **characterized in that** the infrared battery pack communication module (21) comprises a PCB board, and the Hall induction unit, infrared receiving unit and infrared emission unit provided on the PCB board; the battery management system (2) further comprises a BMS controller (23), the battery cell (22), Hall induction unit, infrared receiving unit and infrared emission unit are electrically connected with the BMS controller (23);
the BMS controller (23) comprises a main control module, charging module and discharging module.

16. The power-assisted bicycle rental system of Claim 15, **characterized in that** the charging module (12) of the coupler (1) comprises a left charging terminal (121) and right charging terminal (122) that are respectively provided on the left and right sides of the main body (11) of the coupler (1); the infrared battery pack communication module (21) is provided on the undersurface of the main body (11) of the coupler (1); the charging contact assembly (34) of the locking device (3) is corresponding to the charging terminal of the coupler (1).

17. The power-assisted bicycle rental system of Claim 15, **characterized in that** a fan is provided on the side of cabinet (41) of the station controller (4), and a diversion trench is provided under the fan, and a heat dissipation device is provided under the diversion trench;
a power management mechanism is provided in the cabinet (41); the input end of the power management mechanism is connected with 220 V commercial power, the electric power output by solar cell panel and battery, and its output end supplies power to the station controller and locking device and charges the power-assisted bicycle.

18. A control method for the power-assisted bicycle rental system of Claim 17, **characterized in that** the control method comprises the following steps:
Step 1: the charging power conversion monitoring system (43) of the station controller (4) converts 220v AC to low-voltage DC which can be applied for charging several locking devices (3);
Step 2: the coupler (1) of a power-assisted bicycle is inserted into the locking device (3) to allow the charging contact assemblies of both the coupler (1) and locking device (3) to contact with the charging terminal, and the infrared battery pack communication module (21) to communicate with the infrared locking device communication module (35);
Step 3: the controller (32) of locking device (3) reads the electronic tag in the coupler (1) to judge whether it is a power-assisted bicycle , if not, the process ends; otherwise, please move to step 4;
Step 4: the battery cell (22) is charged.

19. The control method for the power-assisted bicycle rental system of Claim 18, **characterized in that** in the step 4, the infrared locking device communication module (35) of the locking device (3) communicates with infrared battery pack communication module (21), if the data of the battery cell (22) fail to be obtained, it is identified as a non-power-assisted bicycle, so it is not required to charge the locking device (3); if the data of the battery cell (22) is obtained, when the quantity of electricity of the battery cell (22) exceeds the required charging quantity of electricity, it is not required to charge the locking device (3); when the charging quantity of electricity reaches the required quantity of electricity, it is required to stop charging to the locking device (3);
in the step 2, after the coupler (1) is inserted into the locking channel, when the magnetic control switch of the infrared coupler communication module (13) detects the magnetic field emitted by the magnet (353) of the locking device (3), it gives a signal to the locking device (3) to indicate that the power-assisted bicycle has been parked in right place; after the infrared locking device communication module (35) of the locking device (3) communicates with the infrared battery pack communication module (21), and the Hall induction unit in the infrared battery pack communication module (21) senses the magnet (353) of the locking device (3), the discharging module of the power-assisted bicycle is closed.

## Patentansprüche

1. Koppler eines stromunterstützten Fahrrads, umfassend einen Hauptkörper (11) mit einem Hohlraum (111) und einem elektronischen Etikett zum Identifizieren der Fahrzeugidentität in dem Hohlraum, **dadurch gekennzeichnet, dass** der Koppler eines stromunterstützten Fahrrads weiterhin ein Lademodul (12) und ein Infrarotkoppler-Kommunikationsmodul (13) umfasst;
wobei ein linker Ladeanschluss (121) des Lademoduls (12) auf der linken Seite des Hauptkörpers (11) exponiert ist, während ein rechter Ladeanschluss (122) auf der rechten Seite des Hauptkörpers (11) exponiert ist;
und wobei eine Linse (131) des Infrarotkoppler-Kommunikationsmoduls (13) an der Oberfläche des Hauptkörpers (11 exponiert ist;
und wobei ein Verriegelungsloch (111) am vorderen Ende des Hauptkörpers (11) vorgesehen ist.

2. Koppler eines stromunterstützten Fahrrads nach Anspruch 1, **dadurch gekennzeichnet, dass** eine linke Isolationsschicht eng um den linken Ladeanschluss (121) gewickelt ist, während eine rechte Isolationsschicht eng um den rechten Ladeanschluss (122) gewickelt ist;
wobei das Lademodul (12) weiterhin eine zylindrische Hülle, ein Ladekabel und eine Ladesäule umfasst;
und wobei die linke Platte (123) der zylindrischen Hülle die linke Isolationsschicht und die rechte Platte (124) der zylindrischen Hülle die rechte Isolationsschicht bildet;
und wobei der Hohlraum des Hauptkörpers (11) einen Führungskanal (112) umfasst und das Ladekabel in dem Führungskanal (112) vorgesehen ist;
und wobei eine Seite der Ladesäule mit dem Ladeanschluss und die andere Seite mit dem Ladekabel verbunden ist.

3. Koppler eines stromunterstützten Fahrrads nach Anspruch 2, **dadurch gekennzeichnet, dass** die Ladesäule eine linke Ladesäule (125) und eine rechte Ladesäule (126) umfasst, wobei ein nach hinten führendes Führungsloch (127) an der hinteren Seitenwand der zylindrischen Hülle vorgesehen ist;
und wobei eine Seite der linken Ladesäule (125) mit dem linken Ladeanschluss verbunden ist, und wobei die andere Seite sich aus dem Führungsloch (127) heraus erstreckt und mit dem Ladekabel verbunden ist;
und wobei eine Seite der rechten Ladesäule (126) mit dem rechten Ladeanschluss verbunden ist, und wobei die andere Seite sich aus dem Führungsloch (127) heraus erstreckt und mit dem Ladekabel verbunden ist;
und wobei die linke Seite des linken Ladeanschlusses (121) auf die linke Seite der linken Platte (123) und die linke Seite des Hauptkörpers (11) ausgerichtet ist; und wobei die rechte Seite des linken Ladeanschlusses (122) auf die rechte Seite der rechten Platte (124) und die rechte Seite des Hauptkörpers (11) ausgerichtet ist.

4. Koppler eines stromunterstützten Fahrrads nach Anspruch 3, **dadurch gekennzeichnet, dass** sich die linke Platte (123) herum erstreckt, um eine an der Seitenwand anstoßende Lippenkante (128) zu bilden, wobei eine linke Öffnung (113), die auf die Außenkontur der linken Platte (123) mit einer Lippenkante abgestimmt ist, auf der linken Seite des Hauptkörpers (11) vorgesehen ist, während eine rechte Öffnung, die auf die Außenkontur der rechten Platte (124) abgestimmt ist, auf der rechten Seite des Hauptkörpers (11) vorgesehen ist; und wobei eine Positionierungsstufe (114) rechts von der linken Öffnung (113) angeordnet ist, und wobei die Positionierungsstufe (114) dadurch eine Positionierung realisiert, dass sie der Lippenkante (128) standhält, wenn die zylindrische Hülle von der linken Öffnung (113) zur rechten Öffnung durchgeht.

5. Koppler eines stromunterstützten Fahrrads nach Anspruch 2, **dadurch gekennzeichnet, dass** die Koppleranschlussklemme (132) des Infrarotkoppler-Kommunikationsmoduls (13) mit einem Kommunikationskabel verbunden ist und das Kommunikationskabel in einem Führungskanal angeordnet ist; wobei das Infrarotkoppler-Kommunikationsmodul (13) mit einem magnetischen Steuerschalter integriert ist.

6. Koppler eines stromunterstützten Fahrrads nach Anspruch 5, **dadurch gekennzeichnet, dass** eine Lippe (133) an dem Infrarotkoppler-Kommunikationsmodul (13) vorgesehen ist, wobei die beiden Oberflächen der an dem Infrarotkoppler-Kommunikationsmodul (13) gebildeten Lippe (133) vertikal und eng mit der Unterseite und der Rückseite des Verriegelungsblocks (115) kombiniert sind.

7. Koppler eines stromunterstützten Fahrrads nach Anspruch 1, **dadurch gekennzeichnet, dass** er weiterhin eine Abdeckung (14) umfasst;
wobei eine Öffnung an dem Boden des Hauptkörpers (11) vorgesehen ist, und wobei die Abdeckung (14) fest mit dem Hauptkörper (11) verbunden ist und zum Verschließen der Öffnung verwendet wird;
und wobei eine Kontrollbohrung (141) an der Abdeckung (14) vorgesehen ist, und wobei die Linse (131) in die Kontrollbohrung (141) eingesetzt und ihre Unterseite auf die Unterseite der Abdeckung (14) ausgerichtet ist, und wobei die Kontur der Kontrollbohrung (141) auf die Kontur der Linse (131) abgestimmt ist;
und wobei die Außenkontur der Linse (131) rechteckig ausgebildet ist.

8. Koppler eines stromunterstützten Fahrrads nach Anspruch 1, **dadurch gekennzeichnet, dass** der Hauptkörper (11) einen ersten Abschnitt (116), einen zweiten Abschnitt (117) und einen dritten Abschnitt (118) mit integraler Struktur umfasst; wobei die linke-rechte Breite des ersten Abschnitts (116) kleiner als die des dritten Abschnitts (118) ist, und wobei die zylindrische Hülle im ersten Abschnitt (116) vorgesehen ist, und wobei der zweite Abschnitt (117) als eine viereckige Kegelstumpfpyramide ausgebildet und zwischen dem ersten Abschnitt (116) und dem dritten Abschnitt (118) angeordnet ist; und wobei die durch die Abdeckung (14) verschlossene Öffnung durch den ersten Abschnitt (116), den zweiten Abschnitt (117) und den dritten Abschnitt (118) geht;
und wobei das Verriegelungsloch (111) am vorderen Ende des ersten Abschnitts (116) vorgesehen ist und ein quadratisches Loch, das von links nach rechts durch den ersten Abschnitt (116) geht, bildet; und wobei auf der rechten Seite des ersten Abschnitts (116) ein Kommunikationsschlitz vorgesehen ist, der sich zwischen dem Verriegelungsloch (111) und dem rechten Ladeanschluss (122) befindet, und wobei das elektronische Etikett vorgesehen ist, um sich dem Kommunikationsschlitz zu nähern.

9. Stromunterstütztes Fahrrad, umfassend einen Körper und ein Batteriemanagementsystem (2), wobei das Batteriemanagementsystem (2) ein Infrarot-Kommunikationsmodul und eine Batteriezelle umfasst; und wobei die Batteriezelle an dem Körper vorgesehen ist, **dadurch gekennzeichnet, dass** die Vordergabel des Körpers mit dem Koppler (1) nach einem der Ansprüche 1 bis 8 befestigt ist, wobei das Batteriemanagementsystem (2) jeweils mit dem Infrarotkoppler-Kommunikationsmodul (13) und dem Lademodul (12) elektrisch verbunden ist.

10. Verriegelungsvorrichtung, umfassend eine Hülle (31), eine Steuerung (32) und eine elektrische Steuerverriegelung (33); wobei eine Verriegelungskerbe (311) an der Seite der Hülle (31) vorgesehen und mit dem Verriegelungskanal in der Hülle verbunden ist; und wobei die elektrische Steuerverriegelung (33) ist mit der Steuerung (32) verbunden ist, und wobei die Steuerung (32) das Öffnen und das Schließen der elektrischen Steuerverriegelung (33) steuert, **dadurch gekennzeichnet, dass** sie weiterhin zwei Ladekontaktanordnungen (34), ein Kommunikationsmodul (35) der Infrarotverriegelungsvorrichtung und ein Ladegerät (36) umfasst;
wobei die beiden Ladekontaktanordnungen (34) in der Hülle (31) befestigt sind; und wobei die beiden Ladekontaktanordnungen (34) für die jeweilige elektrische Verbindung mit den beiden Ladeanschlüssen am Koppler eines stromunterstützten Fahrrads (1) verwendet werden, wenn sie sich in den Verriegelungskanal erstrecken;
und wobei das Kommunikationsmodul (35) der Infrarotverriegelungsvorrichtung in der Hülle (31) befestigt ist; und wobei das Kommunikationsmodul (35) der Infrarotverriegelungsvorrichtung für die Infrarotkommunikation mit dem Infrarotkoppler-Kommunikationsmodul (13) an dem stromunterstützten Fahrrad verwendet wird, wenn es sich in den Verriegelungskanal erstreckt;
und wobei das Ladegerät (36) mit den beiden Ladekontaktanordnungen (34) elektrisch verbunden ist;
und wobei die Steuerung (32) jeweils mit dem Ladegerät (36) und dem Kommunikationsmodul (35) der Infrarotverriegelungsvorrichtung elektrisch verbunden ist.

11. Verriegelungsvorrichtung nach Anspruch 10, **dadurch gekennzeichnet, dass** jede Ladekontaktanordnung (34) eine Metallhülle (341) und eine in der Metallhülle (341) vorgesehene Rollkugel und Druckfeder umfasst;
wobei eine Seite der Metallhülle (341) geschlossen und eine kreisförmige Öffnung in der Mitte der anderen Seite vorgesehen ist;
und wobei der Durchmesser der Rollkugel größer als der der kreisförmigen Öffnung ist;
und wobei eine Seite der Druckfeder auf die geschlossene Seite der Metallhülle gedrückt ist, und wobei die andere Seite die Rollkugel drückt und ermöglicht, dass ein Teil der Rollkugel von der kreisförmigen Öffnung aus der Metallhülle herausragt;
und wobei die beiden Metallhüllen (341) rechts und links des Verriegelungskanals vorgesehen sind, und wobei die Ebenen, in denen sich die beiden kreisförmigen Öffnungen befinden, parallel zueinander und symmetrisch zur Mittelebene des Verriegelungskanals ausgerichtet sind;
und wobei die Mittelebene eine vertikale Ebene ist, die den Verriegelungskanal gleichmäßig aufteilt.

12. Verriegelungsvorrichtung nach Anspruch 11, **dadurch gekennzeichnet, dass** die beiden Ladekontaktanordnungen (34) weiterhin zwei Anschlussklemmen (342) der Verriegelungsvorrichtung umfassen, die mit der Metallhülle (341) und dem Ladegerät (36) verbunden sind;
wobei die Metallhülle (341) zylindrisch ausgebildet ist, und wobei die Anschlussklemme (342) der Verriegelungsvorrichtung ein L-förmiges integrales Biegeteil und ein kreisbogenförmig gewundenes Teil umfasst, und wobei die Innenwand des gewundenen Teils eng mit der Außenwand des Metallhülle (341) kombiniert ist, und wobei das Biegeteil das Ladegerät (36) über ein Ladekabel verbindet.

13. Verriegelungsvorrichtung nach Anspruch 12, **dadurch gekennzeichnet, dass** die beiden Ladekontaktanordnungen (34) weiterhin zwei feste Komponenten umfassen, die durch eine Basis (343) und einen Pressblock (344) ausgebildet sind, wobei die Basis (343) an der Bodenplatte der Hülle (31) befestigt ist, und wobei die Anschlussklemme (342) der Verriegelungsvorrichtung in die Nut der Basis (343) eingelegt ist, und wobei der Pressblock (344) durch Schrauben mit der Basis (343) fest verbunden ist, und wobei die Metallhülle (341) zwischen den Pressblock (344) und die Basis (343) gedrückt ist;
und wobei an der vorderen Hüllenplatte der Hülle (31) eine U-förmige Hülle (312) hervorsteht, und wobei die Verriegelungskerbe (311) an der U-förmigen Hülle (312) vorgesehen ist, und wobei ein Positionierungsbolzen (313) und eine Montageplatte (314) in der U-förmigen Hülle (312) vorgesehen sind, und wobei das untere Ende des Positionierungsbolzens (313) an der Bodenplatte der Hülle (31) befestigt und sein oberes Ende fest mit der Montageplatte (314) verbunden ist, und wobei die Innenwand der U-förmigen Hülle (312) eng mit der Kante der Montageplatte (314) verbunden ist, und wobei die Montageplatte (314) auf die beiden Pressblöcke (344) gedrückt ist.

14. Verleihsystem für ein stromunterstütztes Fahrrad, umfassend ein stromunterstütztes Fahrrad, eine Verriegelungsvorrichtung (3) und eine Stationssteuerung (4), **dadurch gekennzeichnet, dass** das stromunterstützte Fahrrad die Struktur von Anspruch 9 annimmt, aufweisend einen Koppler (1) und ein Batteriemanagementsystem (2); wobei der Koppler (1) das Lademodul (12) mit einem Ladeanschluss umfasst; und wobei das Batteriemanagementsystem (2) ein Infrarot-Batteriepack-Kommunikationsmodul (21) und eine Batteriezelle (22) umfasst; und wobei die Verriegelungsvorrichtung (3) eine beliebige Struktur nach Anspruch 10-13 annimmt, und wobei das Ladegerät (36) an der Hülle (31) vorgesehen ist; und wobei die Stationssteuerung (4) einen Schrank (41), ein Stations-MCU (42) und ein in dem Schrank (41) vorgesehenes Ladeleistungsumwandlungs-Überwachungssystem (43) umfasst; und wobei das Ladeleistungsumwandlungs-Überwachungssystem (43) einen Stromrichter umfasst, dessen Ausgabeende das Eingabeende des Ladegeräts (36) der Verriegelungsvorrichtung (3) verbindet.

15. Verleihsystem für ein stromunterstütztes Fahrrad nach Anspruch 14, **dadurch gekennzeichnet, dass** das Infrarot-Batteriepack-Kommunikationsmodul (21) eine Leiterplatte und die auf der Leiterplatte vorgesehene Hall-Induktionseinheit, Infrarot-Empfangseinheit und Infrarot-Emissionseinheit umfasst; wobei das Batteriemanagementsystem (2) weiterhin eine BMS-Steuerung (23) umfasst, und wobei die Batteriezelle (22), die Hall-Induktionseinheit, die Infrarotempfangseinheit und die Infrarotemissionseinheit mit der BMS-Steuerung (23) elektrisch verbunden sind;
und wobei die BMS-Steuerung (23) ein Hauptsteuermodul, ein Lademodul und ein Entlademodul umfasst.

16. Verleihsystem für ein stromunterstütztes Fahrrad nach Anspruch 15, **dadurch gekennzeichnet, dass** das Lademodul (12) des Kopplers (1) einen linken Ladeanschluss (121) und einen rechten Ladeanschluss (122) umfasst, die jeweils auf der linken und rechten Seite des Hauptkörpers (11) des Kopplers (1) vorgesehen sind; wobei das Infrarot-Batteriepack-Kommunikationsmodul (21) an der Unterseite des Hauptkörpers (11) des Kopplers (1) vorgesehen ist; und wobei die Ladekontaktanordnung (34) der Verriegelungsvorrichtung (3) dem Ladeanschluss des Kopplers (1) entspricht.

17. Verleihsystem für ein stromunterstütztes Fahrrad nach Anspruch 15, **dadurch gekennzeichnet, dass** ein Ventilator an der Seite des Schranks (41) der Stationssteuerung (4) vorgesehen ist, wobei ein Führungsschlitz unter dem Ventilator vorgesehen ist, und wobei eine Wärmeableitungsvorrichtung unter dem Führungsschlitz vorgesehen ist;
und wobei in dem Schrank (41) ein Energiemanagementmechanismus vorgesehen ist; und wobei das Eingabeende des Energiemanagementmechanismus mit kommerzieller Energie von 220 V verbunden ist, und wobei die elektrische Energie von einem Solarzellenpanel und einer Batterie ausgegeben wird, und wobei sein Ausgabeende die Stationssteuerung und die Verriegelungsvorrichtung mit Strom versorgt und das stromunterstützte Fahrrad auflädt.

18. Steuerverfahren für das Verleihsystem für ein stromunterstütztes Fahrrad nach Anspruch 17, **dadurch gekennzeichnet, dass** das Steuerverfahren die folgenden Schritte umfasst:
Schritt 1: das Ladeleistungsumwandlungs-Überwachungssystem (43) der Stationssteuerung (4) wandelt 220 V Wechselstrom in Niederspannungsgleichstrom um, der zum Laden mehrerer Verriegelungsvorrichtungen (3) verwendet werden kann;
Schritt 2: der Koppler (1) eines stromunterstützten Fahrrads wird in die Verriegelungsvorrichtung (3) eingelegt, damit die Ladekontaktanordnungen sowohl des Kopplers (1) als auch der Verriegelungsvorrichtung (3) mit dem Ladeanschluss in Kontakt kommen können und das Infrarot-Batteriepack-Kommunikationsmodul (21) mit dem Infrarot-Verriegelungsvorrichtungs-Kommunikationsmodul (35) kommunizieren kann;
Schritt 3: die Steuerung (32) der Verriegelungsvorrichtung (3) liest das elektronische Etikett im Koppler (1), um zu beurteilen, ob es sich um ein stromunterstütztes Fahrrad handelt, wenn nicht, endet der Vorgang; andernfalls setzen Sie bitte mit Schritt 4 fort.
Schritt 4: die Batteriezelle (22) wird aufgeladen.

19. Steuerverfahren für das Verleihsystem für ein stromunterstütztes Fahrrad nach Anspruch 18, **dadurch gekennzeichnet, dass** im Schritt 4 das Infrarot-Verriegelungsvorrichtungs-Kommunikationsmodul (35) der Verriegelungsvorrichtung (3) mit dem Infrarot-Batteriepack-Kommunikationsmodul (21) kommuniziert, wenn die Daten der Batteriezelle (22) nicht erhalten werden, wird sie als ein nicht stromunterstütztes Fahrrad identifiziert, so dass es nicht erfordert ist, die Verriegelungsvorrichtung (3) aufzuladen; wenn die Daten der Batteriezelle (22) erhalten werden, wenn die Elektrizitätsmenge der Batteriezelle (22) die erforderliche Lademenge von Elektrizität überschreitet, ist es nicht erfordert, die Verriegelungsvorrichtung (3) aufzuladen; wenn die Lademenge von Elektrizität die erforderliche Elektrizitätsmenge erreicht, ist es erfordert, den Ladevorgang der Verriegelungsvorrichtung (3) zu beenden;
nachdem im Schritt 2 der Koppler (1) in den Verriegelungskanal eingelegt wurde, wenn der Magnetsteuerschalter des Infrarotkoppler-Kommunikationsmoduls (13) das durch den Magneten (353) der Verriegelungsvorrichtung (3) emittierte Magnetfeld erfasst, gibt er ein Signal an die Verriegelungsvorrichtung (3) aus, um anzuzeigen, dass das stromunterstützte Fahrrad an der richtigen Stelle geparkt wurde; nachdem das Infrarot-Verriegelungsvorrichtungs-Kommunikationsmodul (35) der Verriegelungsvorrichtung (3) mit dem Infrarot-Batteriepack-Kommunikationsmodul (21) kommunizierte und die Hall-Induktionseinheit in dem Infrarot-Batteriepack-Kommunikationsmodul (21) den Magneten (353) der Verriegelungsvorrichtung (3) erfasste, wird das Entlademodul des stromunterstützten Fahrrads geschlossen.

## Revendications

1. Coupleur d'un vélo à assistance électrique, comportant un corps principal (11) avec une cavité (111) et une étiquette électronique pour l'identification de l'identité du véhicule dans la cavité, **caractérisé en ce que** le coupleur d'un vélo à assistance électrique comprend en outre un module de mise en charge (12) et un module de communication infrarouge de coupleur (13);
une borne gauche de mise en charge (121) du module de mise en charge (12) est exposée sur la face latérale gauche du corps principal (11) tandis qu'une borne droite de mise en charge (122) est exposée sur la face latérale droite du corps principal (11) ;
une lentille (131) du module de communication infrarouge de coupleur (13) est exposée sur la surface du corps principal (11);
un trou de verrouillage (111) est prévu sur l'extrémité avant du corps principal (11).

2. Coupleur d'un vélo à assistance électrique selon la revendication 1, **caractérisée en ce qu'**une couche d'isolation gauche s'enroule étroitement autour de la borne gauche de mise en charge (121) tandis qu'une couche droite d'isolation s'enroule étroitement autour de la borne droite de mise en charge (122);
le module de mise en charge (12) comprend en outre une coque cylindrique, un câble de mise en charge et une colonne de mise en charge;
un panneau gauche (123) de la coque cylindrique forme une couche gauche d'isolation et un panneau droit (124) de la coque cylindrique forme une couche droite d'isolation;
la cavité du corps principal (11) comprend un canal d'acheminement (112), et le câble de mise en charge est prévu dans le canal d'acheminement (112);
un côté de la colonne de mise en charge est relié à la borne de mise en charge et un autre côté est relié au câble de mise en charge.

3. Coupleur d'un vélo à assistance électrique selon la revendication 2, **caractérisé en ce que** la colonne de mise en charge comprend une colonne de mise en charge gauche (125) et une colonne de mise en charge droite (126); un trou d'acheminement (127) menant à l'arrière est disposé sur une paroi latérale arrière de la coque cylindrique;
un côté de la colonne de mise en charge (125) est relié à la borne gauche de mise en charge et l'autre côté s'étirehors du trou d'acheminement (127) et est relié au câble de mise en charge;
un côté de la colonne gauche de mise en charge droite (126) est relié à la borne droite de mise en charge et un autre côté s'étire dehors du trou d'acheminement (127) et est relié au câble de mise en charge;
le côté gauche de la borne gauche de mise en charge (121) s'aligne sur le côté gauche du panneau gauche (123) et le côté gauche du corps principal (11); le côté droit de la borne droite de mise en charge (122) s'aligne sur le côté droit du panneau droit (124) et le côté droit du corps principal (11).

4. Coupleur d'un vélo à assistance électrique selon la revendication 3, **caractérisée en ce que** le panneau gauche (123) s'étire pour former un bord de lèvre (128) relevé contre la paroi latérale, une ouverture gauche (113) conforme au contour extérieur du panneau gauche (123) avec un bord de lèvre est prévu sur le côté gauche du corps principal (11) tandis qu'une ouverture droite conforme au contour extérieur du panneau droit (124) est prévue sur le côté droit du corps principal (11); une étape de positionnement (114) est prévue à droite de l'ouverture gauche (113), lorsque la coque cylindrique passe de l'ouverture gauche (113) à l'ouverture droite, l'étape de positionnement (114) réalise le positionnement en résistant au bord des lèvres (128).

5. Coupleur d'un vélo à assistance électrique selon la revendication 2, **caractérisé en ce que** une borne de connexion de coupleur (132) du module de communication infrarouge de coupleur (13) est relié avec un câble de communication, et le câble de communication est disposé dans un canal d'acheminement; le module de communication infrarouge de coupleur (13) est intégré à un interrupteur de commande magnétique.

6. Coupleur d'un vélo à assistance électrique selon la revendication 5, **caractérisé en ce qu'**une lèvre (133) est prévue sur le module de communication infrarouge de coupleur (13), et les deux surfaces de la lèvre (133) formant sur le module de communication infrarouge de coupleur (13) sont assemblés verticalement et étroitement avec la surface inférieure et la surface arrière d'un bloc de verrouillage (115) respectivement.

7. Coupleur d'un vélo à assistance électrique selon la revendication 1, **caractérisé en ce qu'**il comprend en outre un couvercle (14);
une ouverture est prévue au bas du corps principal (11), et le couvercle (14) est fermement relié au corps principal (11) et est configuré pour fermer l'ouverture;
un trou témoin (141) est prévu sur le couvercle (14), et la lentille (131) est disposée dans le trou témoin (141) et sa surface inférieure s'aligne sur la surface inférieure du couvercle (14) et le contour du trou témoin (141) est conforme à celui de la lentille (131);
le contour extérieur de la lentille (131) est rectangulaire.

8. Coupleur d'un vélo à assistance électrique selon la revendication 1, **caractérisé en ce que** le corps principal (11) comprend une première partie (116), une deuxième partie (117) et une troisième partie (118) de structure intégrale; la largeur gauche-droite de la première partie (116) est inférieure à celle de la troisième partie (118), et la coque cylindrique est prévue dans la première partie (116), et la deuxième partie (117) est une pyramide tronculaire quadrangulaire et est disposé entre la première partie (116) et la troisième partie (118); l'ouverture scellée par le couvercle (14) traverse la première partie (116), la deuxième partie (117) et la troisième partie (118);
le trou de verrouillage (111) est prévu sur l'extrémité avant de la première partie (116) et forme le trou carré traversant la première partie (116) de gauche à droite; une fente de communication est prévue sur le côté droit de la première partie (116), et est située entre le trou de verrouillage (111) et la borne droite de mise en charge (122), et l'étiquette électronique est prévue pour se rapprocher de la fente de communication.

9. Vélo à assistance électrique, comportant un corps et un système de gestion de batterie (2) qui comprend un module de communication infrarouge et une cellule de batterie qui est prévue sur le corps, **caractérisée en ce que** une fourche avant du corps est fixée avec le coupleur (1) selon l'une quelconque des revendications 1 à 8, et le système de gestion de batterie (2) est relié électriquement au module de communication infrarouge de coupleur (13) et au module de mise en charge (12) respectivement.

10. Dispositif de verrouillage comportant une coque (31), un contrôleur (32) et un verrou de commande électrique (33); une encoche de verrouillage (311) qui est prévue sur le côté de la coque (31) et reliée au canal de verrouillage dans la coque (31); et le verrou de commande électrique (33) qui est relié au contrôleur (32) et le contrôleur (32) commande l'ouverture et la fermeture du verrou de commande électrique (33), **caractérisé en ce qu'**il comprend en outre deux ensembles de contacts de mise en charge (34), un module de communication infrarouge du dispositif de verrouillage (35) et un chargeur (36);
les deux ensembles de contacts de mise en charge (34) sont fixés dans la coque (31); les deux ensembles de contacts de mise en charge (34) sont configurés pour une connexion électrique respective avec les deux bornes de mise en charge sur le coupleur d'un vélo à assistance électrique (1) lorsqu'ils s'étirent dans le canal de verrouillage;
le module de communication infrarouge du dispositif de verrouillage (35) est fixé dans la coque (31); le module de communication infrarouge du dispositif de verrouillage (35) est configuré pour la communication infrarouge avec le module de communication infrarouge du coupleur (13) sur le vélo à assistance électrique lorsqu'il s'étire dans le canal de verrouillage;
le chargeur (36) est relié électriquement aux deux ensembles de contacts de mise en charge (34);
le contrôleur (32) est relié électriquement au chargeur (36) et au module de communication infrarouge du dispositif de verrouillage (35) respectivement.

11. Dispositif de verrouillage selon la revendication 10, **caractérisé en ce que** chaque ensemble de contacts de mise en charge (34) comprend une coque métallique (341) et une bille roulante et un ressort comprimé prévus dans la coque métallique (341);
un côté de la coque métallique (341) est fermé et une ouverture circulaire est prévue au centre d'un autre côté;
le diamètre de la bille roulante est supérieur à celui de l'ouverture circulaire;
un côté du ressort comprimé s'appuie sur le côté fermé de la coque métallique, et un autre côté appuie la bille roulante et permet à une partie de la bille roulante de dépasser de la coque métallique depuis l'ouverture circulaire;
les deux coques métalliques (341) sont prévues à droite et à gauche du canal de verrouillage, et les plans où se trouvent les deux ouvertures circulaires sont parallèles entre eux et sont symétriques au plan central du canal de verrouillage;
le plan central est un plan vertical divisant également le canal de verrouillage.

12. Dispositif de verrouillage selon la revendication 11, **caractérisé en ce que** les deux ensembles de contacts de mise en charge (34) comprennent en outre deux bornes de connexion du dispositif de verrouillage (342) qui sont reliées à la coque métallique (341) et au chargeur (36);
la coque métallique (341) est cylindrique et la borne de connexion du dispositif de verrouillage (342) comprend une partie de flexion en forme de L intégrale et une partie alvéolée à arc circulaire, la paroi intérieure de la partie alvéolée est étroitement liée à la paroi extérieure de la une coque métallique (341) et la partie de flexion relie le chargeur (36) à travers un câble de mise en charge.

13. Dispositif de verrouillage selon la revendication 12, **caractérisé en ce que** les deux ensembles de contacts de mise en charge (34) comprennent en outre deux composants fixes qui sont composés d'une base (343) et d'un bloc de pression (344), la base (343) est fixée sur le la plaque bas de la coque (31) et la borne de connexion du dispositif de verrouillage (342) sont incrustées dans une rainure de la base (343), et le bloc de pression (344) est fermement relié à la base (343) par vis, et la coque métallique (341) s'appuie entre le bloc de pression (344) et la base (343);
il y a une coque en forme de U (312) faisant saillie vers l'avant sur la plaque de coque avant de la coque (31), et l'encoche de verrouillage (311) est prévue sur la coque en forme de U (312), un goujon de positionnement (313) et une plaque de montage (314) sont prévue dans la coque en forme de U (312), l'extrémité inférieure du goujon de positionnement (313) est fixée sur la plaque bas de la coque (31) et son extrémité supérieure est fermement reliée à la plaque de montage (314), et une paroi intérieure de la coque en forme de U (312) est étroitement liée au bord de la plaque de montage (314), et la plaque de montage (314) s'appuie sur les deux blocs de pression (344).

14. Système de location de vélos à assistance électrique comprenant un vélo à assistance électrique, un dispositif de verrouillage (3), un contrôleur de station (4), **caractérisé en ce que** le vélo à assistance électrique adopte la structure de la revendication 9 qui comprend un coupleur (1) et un système de gestion de batterie (2); le coupleur (1) comprend un module de mise en charge (12) avec une borne de mise en charge; le système de gestion de batterie (2) comprend un module de communication infrarouge de bloc de batteries (21) et une cellule de batterie (22); le dispositif de verrouillage (3) adopte toute structure des revendications 10-13, le chargeur (36) étant prévu sur la coque (31); le contrôleur de station (4) comprend une armoire (41) et une station MCU (42) et un système de surveillance de conversion de puissance de mise en charge (43) prévu à l'intérieur de l'armoire (41); le système de surveillance de conversion de puissance de mise en charge (43) comprend un convertisseur de puissance, et son extrémité de sortie est relié à l'extrémité d'entrée du chargeur (36) du dispositif de verrouillage (3).

15. Système de location de vélos à assistance électrique selon la revendication 14, **caractérisé en ce que** le module de communication infrarouge de bloc de batteries (21) comprend une carte PCB, et une unité d'induction Hall, une unité de réception infrarouge et une unité d'émission infrarouge prévues sur la carte PCB; le système de gestion de batterie (2) comprend en outre un contrôleur BMS (23), la cellule de batterie (22), l'unité d'induction Hall, l'unité de réception infrarouge et l'unité d'émission infrarouge sont reliées électriquement au contrôleur BMS (23);
le contrôleur BMS (23) comprend un module de commande principal, un module de mise en charge et un module de décharge.

16. Système de location de vélos à assistance électrique selon la revendication 15, **caractérisé en ce que** le module de mise en charge (12) du coupleur (1) comprend une borne gauche de mise en charge (121) et une borne droite de mise en charge (122) qui sont respectivement prévues sur les côtés gauche et droit du corps principal (11) du coupleur (1); le module de communication infrarouge de bloc de batteries (21) est prévu sur la surface en dessous du corps principal (11) du coupleur (1); l'ensemble de contacts de mise en charge (34) du dispositif de verrouillage (3) correspond à la borne de mise en charge du coupleur (1).

17. Système de location de vélos à assistance électrique selon la revendication 15, **caractérisé en ce qu'**un ventilateur est prévu sur le côté de l'armoire (41) du contrôleur de station (4), et une tranchée de dérivation est prévue sous le ventilateur, et un dispositif de dissipation thermique est prévu sous la tranchée de dérivation;
un mécanisme de gestion de l'alimentation est prévu dans l'armoire (41); l'extrémité d'entrée du mécanisme de gestion de l'alimentation est reliée à une alimentation commerciale de 220 V, la puissance électrique fournie par le panneau de cellule solaire et de batterie, et son extrémité de sortie alimente le contrôleur de station et le dispositif de verrouillage et charge le vélo à assistance électrique.

18. Procédé de commande du système de location de vélos à assistance électrique selon la revendication 17, **caractérisé en ce que** le procédé de commande comprend les étapes suivantes:
Étape 1: le système de surveillance de conversion de puissance de mise en charge (43) du contrôleur de station (4) convertit 220V CA en CC basse tension qui peut être configuré pour charger plusieurs dispositifs de verrouillage (3);
Étape 2: le coupleur (1) d'un vélo à assistance électrique est inséré dans le dispositif de verrouillage (3) pour permettre aux assembles de contacts de mise en charge du coupleur (1) et du dispositif de verrouillage (3) d'entrer en contact avec la borne de mise en charge, et le module de communication infrarouge de bloc de batteries (21) pour communiquer avec le module de communication infrarouge de dispositif de verrouillage (35);
Étape 3: le contrôleur (32) du dispositif de verrouillage (3) lit l'étiquette électronique dans le coupleur (1) pour juger s'il s'agit d'un vélo à assistance électrique, sinon, le processus se termine; si oui, passez à l'étape 4;
Étape 4: la cellule de batterie (22) est chargée.

19. Procédé de commande du système de location de vélos à assistance électrique selon la revendication 18, **caractérisé en ce qu'**à l'étape 4, le module de communication infrarouge du dispositif de verrouillage (35) du dispositif de verrouillage (3) communique avec le module de communication infrarouge du bloc de batteries (21), si les données de la cellule de batterie (22) ne sont pas obtenues, elle n'est pas identifiée comme un vélo à assistance électrique, il n'est donc pas nécessaire de charger le dispositif de verrouillage (3); si les données de la cellule de batterie (22) sont obtenues, lorsque la quantité d'électricité de la cellule de batterie (22) dépasse la quantité de mise en charge d'électricité requise, il n'est pas nécessaire de charger le dispositif de verrouillage (3); lorsque la quantité d'électricité en charge atteint la quantité d'électricité requise, il est nécessaire d'arrêter la charge sur le dispositif de verrouillage (3);
à l'étape 2, après l'insertion du coupleur (1) dans le canal de verrouillage, lorsque l'interrupteur de commande magnétique du module de communication infrarouge de coupleur (13) détecte le champ magnétique émis par un aimant (353) du dispositif de verrouillage (3), il envoie un signal au dispositif de verrouillage (3) pour indiquer que le vélo à assistance électrique a été garé au bon endroit; une fois que le module de communication infrarouge du dispositif de verrouillage (35) du dispositif de verrouillage (3) communique avec le module de communication infrarouge du bloc de batteries (21), et l'unité à induction Hall dans le module de communication infrarouge du bloc de batteries(21) détecte l'aimant (353) du dispositif de verrouillage (3), le module de décharge du vélo à assistance électrique est fermé.
